# FASCICULE DE BREVET EUROPEEN

(11) **EP 4 377 203 B1**
(45) Date de publication et mention de la délivrance du brevet: **03.09.2025**
(21) Numéro de dépôt: 22743501.3
(22) Date de dépôt: 18.07.2022
(51) Int. Cl.: B64C 11/14, B64C 11/02, B64D 27/24, B64D 33/08

(54) **HÉLICE POUR ENSEMBLE PROPULSIF D'AÉRONEF, ENSEMBLE PROPULSIF ET PROCÉDÉ D'UTILISATION D'UN TEL ENSEMBLE PROPULSIF**
PROPELLER FÜR EINE FLUGZEUGANTRIEBSANORDNUNG, ANTRIEBSANORDNUNG UND VERFAHREN ZUR VERWENDUNG SOLCH EINER ANTRIEBSANORDNUNG
PROPELLER FOR AN AIRCRAFT PROPULSION ASSEMBLY, PROPULSION ASSEMBLY, AND METHOD FOR THE USE OF SUCH A PROPULSION ASSEMBLY

(30) Priorité: 29.07.2021 FR 2108228
(43) Date de publication de la demande: 05.06.2024
(73) Titulaire: Safran Helicopter Engines, 64510 Bordes (FR)
(72) Inventeur: REGAUD, Pierre-Luc, 77550 MOISSY-CRAMAYEL (FR); CHARTRAIN, Didier Claude, 77550 MOISSY-CRAMAYEL (FR); COMBEBIAS, Sébastien, 77550 MOISSY-CRAMAYEL (FR); DROUIN, Thomas, 77550 MOISSY-CRAMAYEL (FR); SERGHINE, Camel, 77550 MOISSY-CRAMAYEL (FR); TARNOWSKI, Laurent Pierre, 77550 MOISSY-CRAMAYEL (FR); DERDERIAN, Michael, 69620 FRONTENAS (FR); DUQUEINE, Vincent, 69620 FRONTENAS (FR)
(74) Mandataire: Argyma
(86) Numéro de dépôt international: PCT/EP2022/070058
(87) Numéro de publication internationale: WO 2023/006473

(56) Documents cités:
- WO-A1-2021/112940
- WO-A2-2007/001372
- GB-A- 2 587 668

## Description

### Domaine technique

La présente invention concerne le domaine des ensembles propulsifs pour aéronef, en particulier, un ensemble propulsif comprenant un moteur électrique pour l'entrainement d'une hélice pour assurer la propulsion électrique d'un aéronef.

Afin de réduire l'utilisation d'énergie fossile, il a été proposé d'utiliser des moteurs électriques pour entrainer en rotation une hélice propulsive, c'est-à-dire, des aubes dénuées de carter extérieur.

On connait déjà dans l'art antérieur un ensemble propulsif comprenant un moteur électrique comportant un arbre de rotor entrainant une hélice qui comprend un cône d'hélice s'étendant longitudinalement selon un axe et des pales s'étendant radialement depuis le cône d'hélice. La rotation des pales permet la propulsion de l'aéronef, c'est-à-dire, son déplacement longitudinal vers l'amont.

Un moteur électrique comporte des composants électriques qui doivent être refroidis au cours de son utilisation. De manière connue, le moteur électrique est refroidi par sa mise en contact avec un flux d'air extérieur. Lorsque l'aéronef est au sol ou se déplace à vitesse réduite, le débit d'air est trop faible pour assurer un refroidissement suffisant. Pour éliminer cet inconvénient, une solution immédiate serait d'utiliser un autre fluide de refroidissement mais cela pénaliserait de manière importante la masse et l'encombrement.

L'invention vise ainsi à éliminer au moins certains de ces inconvénients en proposant un ensemble propulsif permettant un refroidissement optimal d'un moteur électrique et n'impactant pas la masse et l'encombrement.

On connaît par la demande de brevet WO2007001372A2 une turbomachine montée dans un carter comportant une veine d'air pour permettre le refroidissement de la turbomachine. Il est enseigné un cône d'hélice depuis lequel s'étend des pales radiales. GB2587668A concerne un système de gestion thermique d'une turbomachine par utilisation d'un flux d'air prélevé au voisinage d'un cône d'hélice.

### PRESENTATION DE L'INVENTION

L'invention concerne une hélice pour ensemble propulsif d'aéronef s'étendant longitudinalement selon un axe X, l'hélice étant configurée pour être positionnée en amont dans l'ensemble propulsif et entrainée en rotation autour dudit axe X, l'hélice comprenant :
- un cône d'hélice et
- des pales s'étendant radialement par rapport audit axe X depuis le cône d'hélice,

L'hélice est remarquable par le fait qu'elle comporte :
- un organe de guidage s'étendant longitudinalement selon l'axe X qui est solidaire en rotation du cône d'hélice, l'organe de guidage étant monté extérieurement au cône d'hélice de manière à ménager entre eux une veine de guidage, l'organe de guidage comportant une ouverture amont configurée pour acheminer un flux d'air dans la veine de guidage et une ouverture aval de manière à évacuer le flux d'air vers l'aval, l'organe de guidage comportant des orifices traversants à travers lesquels s'étendent les pales de l'hélice et
- des aubes de compresseur, solidaires en rotation du cône d'hélice, qui sont positionnées dans la veine de guidage de manière à générer un flux d'air accéléré.

Grâce à l'invention, l'hélice permet d'accélérer et de compresser de manière interne un flux d'air, prélevé en amont dans le milieu extérieur, pour l'évacuer en aval de manière à ce qu'il puisse refroidir un dispositif positionné en aval. Une telle hélice est particulièrement avantageuse pour refroidir le dispositif d'entrainement en rotation de l'hélice qui est placé directement en aval de l'hélice. Le refroidissement est avantageusement performant même lorsque la vitesse relative du flux d'air extérieur (vitesse de l'aéronef) est faible ou nulle. Le refroidissement est en particulier optimal lorsque l'entrainement est réalisé par un moteur électrique qui génère des calories qu'il faut évacuer.

De préférence, l'organe de guidage comporte une lèvre amont qui est profilée. Cela est avantageux pour permettre une admission en amont qui est performante pour différentes incidences du flux d'air amont.

De manière préférée, les aubes de compresseur s'étendent sur toute l'épaisseur radiale de la veine de guidage. Ainsi, la compression est optimale.

De préférence, le cône d'hélice comporte une extrémité amont fermée afin d'améliorer ses performances aérodynamiques.

De préférence, l'organe de guidage et le cône d'hélice sont coaxiaux.

Selon un aspect, la section radiale de la veine de guidage est décroissante de l'amont vers l'aval afin d'augmenter le taux de compression et améliorer le refroidissement.

De préférence, l'organe de guidage et le cône d'hélice possèdent la même longueur longitudinale afin de former un ensemble compact.

De préférence, les aubes de compresseur sont issues de matière de l'organe de guidage et/ou du cône d'hélice. Cela permet de réduire la masse et de former un ensemble compact.

L'invention concerne également un ensemble propulsif pour aéronef s'étendant longitudinalement selon un axe X orienté d'aval en amont, comprenant une hélice, telle que présentée précédemment, positionnée en amont, et un moteur électrique, positionné en aval, configuré pour entrainer l'hélice en rotation selon l'axe X de manière à refroidir le moteur électrique avec un flux d'air accéléré.

Ainsi, le moteur électrique bénéficie d'un refroidissement efficace même lorsque l'aéronef possède une vitesse faible ou nulle.

De manière préférée, l'ensemble comprend des aubes de redresseur montées en sortie de la veine d'air de manière à redresser le flux d'air accéléré. Au cours de la compression, le flux d'air est vrillé du fait de la rotation des aubes de compresseur. Les aubes de redresseur permettent de redresser le flux d'air afin qu'il s'étende parallèlement à l'axe X, ce qui est optimal pour refroidir le moteur électrique qui est aligné axialement avec l'axe X pour entrainer l'hélice. De préférence les aubes de redresseur sont fixes ou à calage variable.

De manière préférée, les aubes de redresseur sont solidaires du moteur électrique de manière à permettre un redressement optimal et précis pour refroidir le moteur électrique.

Selon un aspect de l'invention, le moteur électrique comprend des rangées d'ailettes de refroidissement. Les aubes de redresseur forment une rangée d'ailettes de refroidissement, de préférence, la rangée le plus en amont. Les aubes de redresseur remplissent avantageusement une double fonction en permettant, d'une part, de redresser le flux d'air accéléré dans la veine d'air et, d'autre part, pour conduire les calories issues du moteur électrique. Le refroidissement et la compacité sont améliorés.

De préférence, les aubes de redresseur sont écartées de l'hélice d'un jeu longitudinal compris entre 1 et 10mm. Un tel jeu longitudinal permet d'assurer un compromis entre, d'une part, un écartement suffisant garantissant la sécurité entre un organe mobile et un organe fixe et, d'autre part, une étanchéité suffisante permettant une compression efficace.

L'invention concerne un aéronef comportant au moins un ensemble propulsif tel que présenté précédemment. Selon un aspect, l'aéronef comportant au moins une aile, l'ensemble propulsif étant monté sur l'aile. L'utilisation de plusieurs ensembles propulsifs électriques sur une aile permet de réduire les émissions de carbone. Le refroidissement demeure performant. Selon un autre aspect, l'aéronef comporte une nacelle dans laquelle est monté ledit ensemble propulsif. La nacelle peut être installée dans le nez de l'aéronef ou ailleurs. Un tel ensemble propulsif peut être utilisé pour un décollage vertical et/ou la propulsion en régime de croisière. Un tel ensemble propulsif peut ainsi former un ensemble propulsif central.

L'invention concerne en outre un procédé d'utilisation d'un ensemble propulsif tel que présenté précédemment, procédé comprenant des étapes consistant à :
- Entrainer l'hélice par le moteur électrique afin que les pales fournissent une force de propulsion, et
- Refroidir le moteur électrique par accélération d'un flux d'air dans la veine d'air par les aubes de compresseur.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La [Fig.1] est une représentation schématique d'un aéronef selon une forme de réalisation de l'invention.
La [Fig.2] est une représentation schématique d'un ensemble propulsif selon l'invention.
La [Fig.3] est une représentation schématique de côté de l'ensemble propulsif de la [Fig.2].
La [Fig.4] est une représentation schématique de l'ensemble propulsif de la [Fig.3] avec le cône de guidage représenté en transparence.
La [Fig.5] est une représentation schématique de l'ensemble propulsif sans les pales de l'hélice.
La [Fig.6] est une représentation schématique en demi-coupe longitudinale de l'hélice de l'ensemble propulsif.

Il faut noter que les figures exposent l'invention de manière détaillée pour mettre en œuvre l'invention, lesdites figures pouvant bien entendu servir à mieux définir l'invention le cas échéant.

### DESCRIPTION DETAILLEE DE L'INVENTION

L'invention va être présentée pour un aéronef A comprenant deux ailes W sur lesquelles sont montés plusieurs ensemble propulsif 1 selon l'invention. Les ensembles propulsifs 1 permettent avantageusement une propulsion électrique. Dans cet exemple, l'aéronef A comporte en outre à l'amont du fuselage un ensemble propulsif central 10 qui est électrique ou thermique afin de permettre une propulsion hybride.

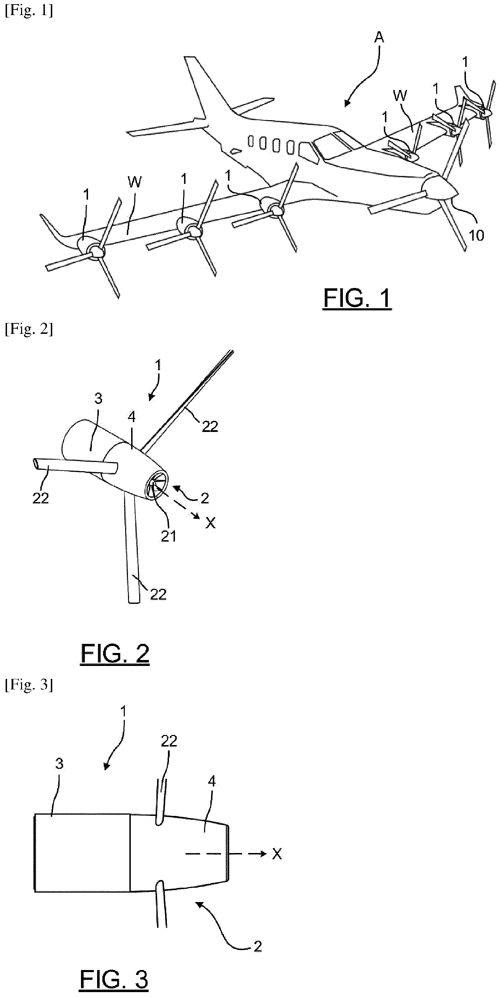

Un ensemble propulsif 1 selon une forme de réalisation de l'invention va être présenté en détails en référence aux figures 2 à 4.

L'ensemble propulsif 1 s'étend longitudinalement selon un axe X orienté d'aval en amont. L'ensemble propulsif 1 comprend une hélice 2, positionnée en amont, et un moteur électrique 3, positionné en aval, configuré pour entrainer l'hélice 2 en rotation selon l'axe X.

### Moteur électrique 3

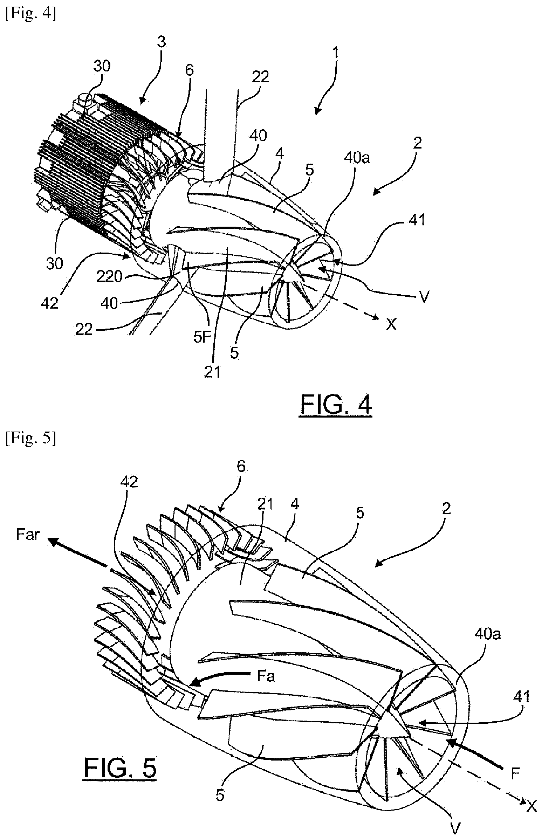

Le moteur électrique 3 comporte de manière connue une partie statorique et une partie rotorique comportant un arbre de rotor relié à l'hélice 2. De manière préférée, le moteur électrique 3 comporte des composants nécessitant d'être refroidis, par exemple, des composants électriques, des composants de puissance, des enroulements magnétiques et autres. Comme illustré à la [Fig.4], le moteur électrique 3 comporte une pluralité d'ailettes 30 en saillie sur sa surface extérieure qui sont configurées pour être refroidies par la circulation d'un flux d'air extérieur. Les ailettes 30 permettent de conduire les calories du moteur électrique 3 à sa surface extérieure.

### Hélice 2

En référence à la [Fig.4], l'hélice 2 comprend un cône d'hélice 21 et des pales d'hélice 22 s'étendant radialement par rapport audit axe X depuis le cône d'hélice 21. De manière préférée, les pales 22 sont au nombre de 3 mais leur nombre pourrait être différent. Les pales 22 sont de préférence réparties angulairement sur le cône d'hélice 21. Dans cet exemple, le moteur électrique 3 est relié à l'hélice 2 par coopération de l'arbre de rotor intérieurement au cône d'hélice 21.

Selon l'invention, en référence à la [Fig.4], l'hélice 2 comporte un organe de guidage 4 s'étendant longitudinalement selon l'axe X qui est solidaire en rotation du cône d'hélice 21. De manière préférée, l'organe de guidage 4 et le cône d'hélice 21 sont coaxiaux et imbriqués pour former une hélice 2 qui soit compacte.

### Organe de guidage 4

L'organe de guidage 4 est montée extérieurement au cône d'hélice 21 de manière à ménager entre eux une veine de guidage V, l'organe de guidage 4 comportant une ouverture amont 41 configurée pour acheminer un flux d'air F dans la veine de guidage V et une ouverture aval 42 de manière à évacuer le flux d'air vers le moteur électrique 3. De manière préférée, l'épaisseur radiale de la veine d'air V est décroissante de l'amont vers l'aval de manière à augmenter la compression du flux d'air F. Comme illustré à la [Fig.4], l'organe de guidage 4 comporte des orifices traversants 40 à travers lesquels s'étendent les pales 22 de l'hélice 2.

De manière préférée, l'organe de guidage 4 se présente sous la forme d'une section d'une enveloppe conique de manière à former une veine de guidage de section calibrée. De préférence, l'organe de guidage 4 et le cône d'hélice 21 possèdent la même longueur longitudinale.

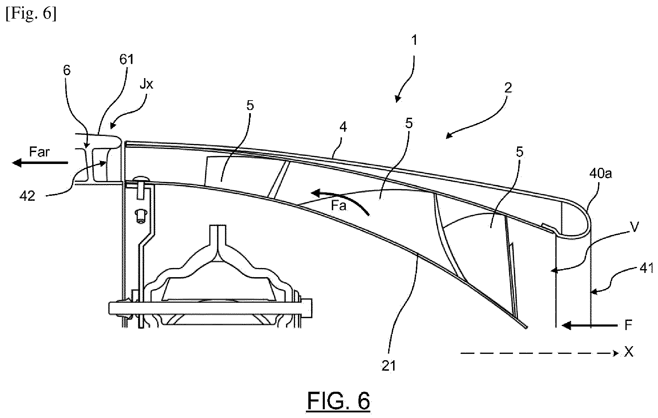

En référence aux figures 5 et 6, l'organe de guidage 4 comporte une lèvre amont 40A qui est profilée de manière à permettre une admission d'air dans la veine d'air V de manière optimale pour différentes incidences du flux d'air et pour différents points de fonctionnement, ce qui permet une compression optimale comme cela sera présenté par la suite.

### Aubes de compresseur 5

Selon l'invention, en référence à la [Fig.4], l'hélice 2 comporte des aubes de compresseur 5, solidaires en rotation du cône d'hélice 21, qui sont positionnées dans la veine de guidage V de manière à refroidir le moteur électrique 3 avec un flux d'air accéléré Fa. Ainsi, même si la vitesse relative de l'air extérieur est faible (aéronef à l'arrêt ou vitesse d'avancement faible), l'hélice 2 permet d'accélérer l'air extérieur de manière à évacuer une pluralité de calories du moteur électrique 3.

De préférence, les aubes de compresseur 5 s'étendent sur toute l'épaisseur radiale de la veine de guidage V en rejoignant la surface extérieure du cône d'hélice 21 et la surface intérieure de l'organe de guidage 4. De manière préférée, la section de la veine d'air V est décroissante de l'amont vers l'aval pour augmenter la compression. L'épaisseur radiale des aubes de compresseur 5 est également décroissante de l'amont vers l'aval. Dans cet exemple, chaque aube de compression 5 possède une forme vrillée de manière à permettre une compression optimale. En référence à la [Fig.5], un flux d'air axial F est admis au niveau de l'ouverture 41 puis accéléré par les aubes de compresseur 5 afin de former un flux d'air accéléré Fa. Le cône d'hélice 21, l'organe de guidage 4 et les aubes de compresseur 5 forme ensemble un compresseur de type « Mixte » ou « Hélico-centrifuge ».

De manière préférée, les aubes de compresseur 5 sont réalisées dans la même matière que l'organe de guidage 4 et/ou du cône d'hélice 21. De préférence, les aubes de compresseur 5 sont issues de matière de l'organe de guidage 4 et/ou du cône d'hélice 21 afin de former un ensemble monobloc et limiter la masse globale.

Le nombre d'aubes de compresseur 5 est indépendant du nombre de pales 22 qui assurent la propulsion, ce qui permet d'optimiser leurs nombres respectifs afin de répondre au mieux aux performances de l'ensemble propulsif 1 en adaptant, d'une part, le débit pour assurer le transfert thermique et, d'autre part, le taux de compression pour s'opposer aux pertes de charge.

Le calage relatif des aubes de compresseur 5 par rapport aux pales 22 est optimisé afin de limiter les interactions aérodynamiques et améliorer le refroidissement. De manière préférée, afin de limiter les interactions au niveau du pied 220 des pales 22 qui s'étendent dans la veine d'air V, le bord de fuite 5F d'une des aubes de compresseur 5 est centré sur le pied 220 de pale 22 comme illustré à la [Fig.4].

De manière préférée, les aubes de compresseur 5 sont distinctes des pales 22, en particulier, du pied d'une pale 22. Cela permet avantageusement d'optimiser la compression et la propulsion. De préférence, chaque aube de compresseur 5 possède une longueur axiale au moins deux fois, de préférence au moins trois fois, supérieure à la longueur axiale du pied d'une pale 22. La compression est alors optimisée.

### Aubes de redresseur 6

Selon un aspect de l'invention, en référence à la [Fig.5], des aubes de redresseur 6 sont montées en sortie de la veine d'air V de manière à redresser le flux d'air accéléré Fa qui est vrillé en sortie des aubes de compresseur 5 afin d'obtenir un flux d'air accéléré et redressé Far pour refroidir axialement la périphérie extérieure du moteur électrique 3. L'ensemble des aubes de redresseur 6 forment un redresseur de type axial ou conique. Les aubes de redresseur 6 peuvent être fixes ou à calage réglable/variable. De telles aubes de redresseur 6 permettent de réduire les pertes de charge en alignant le flux d'air avec le moteur électrique 3 pour une large plage de fonctionnement.

Comme présenté précédemment, le moteur électrique 3 comporte, à sa périphérie, des ailettes de refroidissement 30 qui sont refroidies par le flux d'air. De préférence, les aubes de redresseur 6 sont solidaires du moteur électrique 3 afin d'assurer un positionnement précis et une circulation optimale pour le refroidissement. Selon une variante, les aubes de redresseur 6 forment une rangée d'ailettes de refroidissement 30 du moteur électrique 3, de préférence, la rangée la plus en amont. Autrement dit, les aubes de redresseur 6 sont intégrées au moteur électrique 3 et permettent de redresser et de prélever les calories du moteur électrique 3.

Les aubes de redresseur 6 peuvent être réalisées dans divers matériaux répondant aux exigences de tenue thermomécanique et peuvent obtenues par différentes méthodes, en particulier, par fabrication additive.

Il va de soi que les aubes de redresseur 6 pourraient appartenir à un élément indépendant qui serait monté entre l'organe de guidage 4 et le moteur électrique 3.

En référence à la [Fig.6], les aubes de redresseur 6 sont écartées de l'hélice 2 d'un jeu longitudinal Jx compris entre 1 et 10mm qui permet d'éviter tout contact entre l'hélice 2 (mobile) et les aubes de redresseur 6 (fixes) tout en permettant de limiter toute fuite d'air.

Une lèvre de redresseur 61, de préférence profilée, est positionnée extérieurement aux aubes de redresseur 6 pour favoriser l'écoulement du flux d'air accéléré Fa vers les aubes de redresseur 6. De manière préférée, la lèvre de redresseur 61 est alignée longitudinalement avec l'extrémité arrière de l'organe de guidage 4 pour favoriser un guidage intérieurement à la lèvre de redresseur 61.

### Procédé d'utilisation

L'invention concerne également un procédé d'utilisation d'un ensemble propulsif 1, tel que présenté précédemment, comprenant des étapes consistant à entrainer l'hélice 2 par le moteur électrique 3 afin que les pales 22 fournissent une force de propulsion, et refroidir le moteur électrique 3 par accélération d'un flux d'air F dans la veine d'air V par les aubes de compresseur 5. De manière avantageuse, dès que le moteur électrique 3 est utilisé, un flux d'air accéléré Fa est directement généré pour permettre un refroidissement. Ainsi, tout risque de surchauffe du moteur électrique 3 est évité.

L'encombrement de l'hélice 2 demeure limité, ce qui est avantageux.

## Revendications

1. Hélice (2) pour ensemble propulsif (1) d'aéronef (A) s'étendant longitudinalement selon un axe X, l'hélice (2) étant configurée pour être positionnée en amont dans l'ensemble propulsif (1) et entrainée en rotation autour dudit axe X, l'hélice (2) comprenant :
- un cône d'hélice (21) et
- des pales (22) s'étendant radialement par rapport audit axe X depuis le cône d'hélice (21),
- un organe de guidage (4) s'étendant longitudinalement selon l'axe X qui est solidaire en rotation du cône d'hélice (21), l'organe de guidage (4) étant monté extérieurement au cône d'hélice (21) de manière à ménager entre eux une veine de guidage (V), l'organe de guidage (4) comportant une ouverture amont (41) configurée pour acheminer un flux d'air (F) dans la veine de guidage (V) et une ouverture aval (42) de manière à évacuer le flux d'air (F) vers l'aval, l'organe de guidage (4) comportant des orifices traversants (40) à travers lesquels s'étendent les pales (22) de l'hélice (2),
- hélice (2) **caractérisée par le fait qu'**elle comporte des aubes de compresseur (5), solidaires en rotation du cône d'hélice (21), qui sont positionnées dans la veine de guidage (V) de manière à générer un flux d'air accéléré (Fa), la section radiale de la veine de guidage (V) étant décroissante de l'amont vers l'aval.

2. Hélice (2) selon la revendication 1, dans laquelle l'organe de guidage (4) comporte une lèvre amont (40A) qui est profilée.

3. Hélice (2) selon l'une des revendications 1 à 2, dans laquelle les aubes de compresseur (5) s'étendent sur toute l'épaisseur radiale de la veine de guidage (V).

4. Hélice (2) selon l'une des revendications 1 à 3, dans laquelle le cône d'hélice (21) comporte une extrémité amont fermée.

5. Hélice (2) selon l'une des revendications 1 à 4, dans laquelle les aubes de compresseur (5) sont issues de matière de l'organe de guidage (4) et/ou du cône d'hélice (21).

6. Ensemble propulsif (1) pour aéronef (A) s'étendant longitudinalement selon un axe X orienté d'aval en amont, comprenant :
- Une hélice (2), selon l'une des revendications 1 à 5, positionnée en amont, et
- Un moteur électrique (3), positionné en aval, configuré pour entrainer l'hélice (2) en rotation selon l'axe X de manière à refroidir le moteur électrique (3) avec un flux d'air accéléré (Fa).

7. Ensemble propulsif selon la revendication 6, comprenant des aubes de redresseur (6) montées en sortie de la veine d'air (V) de manière à redresser le flux d'air accéléré (Fa).

8. Ensemble propulsif selon la revendication 7, dans lequel les aubes de redresseur (6) sont solidaires du moteur électrique (3).

9. Ensemble propulsif selon la revendication 8, dans lequel, le moteur électrique comportant des rangées d'ailettes de refroidissement, les aubes de redresseur (6) forment une rangée d'ailettes de refroidissement.

10. Aéronef (A) comportant au moins un ensemble propulsif selon l'une des revendications 6 à 9.

11. Aéronef (A) selon la revendication 10, dans lequel, l'aéronef (A) comportant au moins une aile (W), l'ensemble propulsif (1) étant monté sur l'aile (W).

12. Aéronef (A) selon la revendication 10, dans lequel, l'aéronef (A) comportant au moins une nacelle, l'ensemble propulsif (1) étant monté dans ladite nacelle.

13. Procédé d'utilisation d'un ensemble propulsif (1) selon l'une des revendications 6 à 9, procédé comprenant des étapes consistant à :
- Entrainer l'hélice (2) par le moteur électrique (3) afin que les pales (22) fournissent une force de propulsion, et
- Refroidir le moteur électrique (3) par accélération d'un flux d'air (F) dans la veine d'air (V) par les aubes de compresseur (5).

## Patentansprüche

1. Propeller (2) für eine Antriebsanordnung (1) eines Luftfahrzeugs (A), die sich längs gemäß einer X-Achse erstreckt, wobei der Propeller (2) ausgelegt ist, um stromaufwärts in der Antriebsanordnung (1) positioniert und um die X-Achse rotatorisch angetrieben zu werden, wobei der Propeller (2) umfasst:
- einen Propellerkegel (21) und
- Blätter (22), die sich vom Propellerkegel (21) aus radial zur Achse X erstrecken,
- ein Führungsorgan (4), das sich längs gemäß der Achse X erstreckt und das drehfest mit dem Propellerkegel (21) verbunden ist, wobei das Führungsorgan (4) außen am Propellerkonus (21) derart angebracht ist, dass zwischen ihnen ein Führungskanal (V) ausgebildet wird, wobei das Führungsorgan (4) eine stromaufwärts gelegene Öffnung (41) aufweist, die ausgelegt ist, um einen Luftstrom (F) in den Führungskanal (V) zu leiten, und eine stromabwärts gelegene Öffnung (42), um den Luftstrom (F) stromabwärts abzuleiten, wobei das Führungsorgan (4) Durchgangsöffnungen (40) aufweist, durch die sich die Blätter (22) des Propellers (2) erstrecken,
- wobei der Propeller (2), **dadurch gekennzeichnet, dass** er Verdichterschaufeln (5) aufweist, die drehfest mit dem Propellerkonus (21) verbunden sind, die im Führungskanal (V) derart positioniert sind, dass sie einen beschleunigten Luftstrom (Fa) erzeugen, wobei der radiale Querschnitt des Führungskanals (V) von stromaufwärts nach stromabwärts abnimmt.

2. Propeller (2) nach Anspruch 1, wobei das Führungsorgan (4) eine stromaufwärts gelegene Lippe (40A) aufweist, die profiliert ist.

3. Propeller (2) nach einem der Ansprüche 1 bis 2, wobei sich die Verdichterschaufeln (5) über die gesamte radiale Dicke des Führungskanals (V) erstrecken.

4. Propeller (2) nach einem der Ansprüche 1 bis 3, wobei der Propellerkegel (21) ein geschlossenes stromaufwärtiges Ende aufweist.

5. Propeller (2) nach einem der Ansprüche 1 bis 4, wobei die Verdichterschaufeln (5) aus dem Material des Führungsorgans (4) und/oder des Propellerkonus (21) gefertigt sind.

6. Antriebsanordnung (1) für ein Luftfahrzeug (A), die sich längs gemäß einer von stromabwärts nach stromaufwärts ausgerichteten X-Achse erstreckt, umfassend:
- einen Propeller (2) nach einem der Ansprüche 1 bis 5, der stromaufwärts positioniert ist, und
- einen stromabwärts positionierten Elektromotor (3), der ausgelegt ist, um den Propeller (2) gemäß der X-Achse rotatorisch anzutreiben, um den Elektromotor (3) mit einem beschleunigten Luftstrom (Fa) zu kühlen.

7. Antriebsanordnung nach Anspruch 6, umfassend Leitschaufeln (6), die am Ausgang des Luftkanals (V) derart angebracht sind, dass der beschleunigte Luftstrom (Fa) gerichtet wird.

8. Antriebsanordnung nach Anspruch 7, wobei die Leitschaufeln (6) fest mit dem Elektromotor (3) verbunden sind.

9. Antriebsanordnung nach Anspruch 8, wobei, wenn der Elektromotor Kühlrippenreihen aufweist, die Leitschaufeln (6) eine Kühlrippenreihe bilden.

10. Luftfahrzeug (A), umfassend mindestens eine Antriebsanordnung nach einem der Ansprüche 6 bis 9.

11. Luftfahrzeug (A) nach Anspruch 10, wobei, wenn das Luftfahrzeug (A) mindestens einen Flügel (W) aufweist, die Antriebsanordnung (1) am Flügel (W) angebracht ist.

12. Luftfahrzeug (A) nach Anspruch 10, wobei, wenn das Luftfahrzeug (A) mindestens eine Gondel aufweist, die Antriebsanordnung (1) in der Gondel angebracht ist.

13. Verfahren zur Verwendung einer Antriebsanordnung (1) nach einem der Ansprüche 6 bis 9, wobei das Verfahren folgende Schritte umfasst:
- Antreiben des Propellers (2) durch den Elektromotor (3), so dass die Blätter (22) eine Vortriebskraft liefern, und
- Kühlen des Elektromotors (3) durch Beschleunigung eines Luftstroms (F) in dem Luftkanal (V) durch die Verdichterschaufeln (5).

## Claims

1. Propeller (2) for aircraft (A) propulsion assembly (1) extending longitudinally along an axis X, the propeller (2) being configured to be positioned upstream in the propulsion assembly (1) and rotationally driven around said axis X, the propeller (2) comprising:
- a propeller cone (21) and
- blades (22) extending radially with respect to said axis X from the propeller cone (21),
- a guide member (4) extending longitudinally along the axis X which is rotationally integral with the propeller cone (21), the guide member (4) being mounted outside the propeller cone (21) in such a way as to form between them a guide path (V), the guide member (4) comprising an upstream opening (41) configured to convey an air flow (F) into the guide path (V) and a downstream opening (42) in such a way as to remove the air flow (F) downstream, the guide member (4) comprising through-orifices (40) through which extend the blades (22) of the propeller (2),
- propeller (2) **characterized by** the fact that it comprises compressor vanes (5), rotationally integral with the propeller cone (21), which are positioned in the guide path (V) in such a way as to generate an accelerated air flow (Fa), the radial section of the guide path (V) decreasing from upstream to downstream.

2. Propeller (2) according to claim 1, wherein the guide member (4) comprises an upstream lip (40A) that is profiled.

3. Propeller (2) according to one of claims 1 to 2, wherein the compressor vanes (5) extend over the entire radial thickness of the guide path (V).

4. Propeller (2) according to one of claims 1 to 3, wherein the propeller cone (21) comprises a closed upstream end.

5. Propeller (2) according to one of claims 1 to 4, wherein the compressor vanes (5) are derived from material of the guide member (4) and/or the propeller cone (21).

6. Propulsion assembly (1) for aircraft (A) extending longitudinally along an axis X oriented from downstream to upstream, comprising:
- A propeller (2), according to one of claims 1 to 5, positioned upstream, and
- An electric motor (3), positioned downstream, configured to rotationally drive the propeller (2) along the axis X in such a way as to cool the electric motor (3) with an accelerated air flow (Fa).

7. Propulsion assembly according to claim 6, comprising straightener vanes (6) mounted at the outlet of the air path (V) in such a way as to straighten the accelerated air flow (Fa).

8. Propulsion assembly according to claim 7, wherein the straightener vanes (6) are integral with the electric motor (3).

9. Propulsion assembly according to claim 8, wherein, the electric motor comprising rows of cooling fins, the straightener vanes (6) form a row of cooling fins.

10. Aircraft (A) comprising at least one propulsion assembly according to one of claims 6 to 9.

11. Aircraft (A) according to claim 10, wherein, the aircraft (A) comprising at least one wing (W), the propulsion assembly (1) being mounted on the wing (W).

12. Aircraft (A) according to claim 10, wherein, the aircraft (A) comprising at least one nacelle, the propulsion assembly (1) being mounted in said nacelle.

13. Method of using a propulsion assembly (1) according to one of claims 6 to 9, method comprising steps consisting of:
- Driving the propeller (2) by the electric motor (3) so that the blades (22) provide a propulsion force, and
- Cooling the electric motor (3) by accelerating an air flow (F) in the air path (V) by the compressor vanes (5).
